# EUROPÄISCHE PATENTANMELDUNG

(11) **EP 1 304 605 A1**
(43) Veröffentlichungstag der Anmeldung: **23.04.2003**
(21) Anmeldenummer: 01124998.4
(22) Anmeldetag: 19.10.2001
(51) Int. Cl.: G05B 19/408

(54) **Automatische Parametererfassung**

(71) Anmelder: SIEMENS AKTIENGESELLSCHAFT, 80333 München (DE)
(72) Erfinder: Katoch, Sandeep, IND-Bangalore Kamataka/ HAL 2nd Stage (IN); Plagemann, Bernd, 80469 München (DE); Raipurohit, Nimish, IND-Bangalore Kamataka (IN)

(57) **Zusammenfassung**

Die Erfindung betrifft ein Verfahren und ein System zur teilweise automatisierten Erfassung von Parameterwerten (14) von Parametern (12), die von bestimmten Prozessen (10) benötigt werden, die telekommunikationstechnische Dienste zur Verfügung stellen. Dabei wird eine Definitionsmaske (20) verwendet, aus der automatisch eine Erfassungsmaske (18) generiert wird, die zur Erfassung der Parameterwerte (14) bestimmt ist. Die Erfassungsmaske (18) ist prozeßspezifisch und so ausgelegt, daß Inkonsistenzen hinsichtlich der Werte (14) ausgeschlossen sind, indem der Wert (14) eines von mehreren Prozessen (10) verwendeten Parameters (12) nur einmal eingegeben werden braucht.

## Beschreibung

Die Erfindung betrifft eine Erfassung von Kenngrößen, vorzugsweise Parametern, die von einer Vielzahl von Prozessen verarbeitet werden und die gegenseitige Abhängigkeiten aufweisen können.

Die Erfindung bezieht sich insbesondere auf die automatische Erfassung von Parametern bei einem verteilten System von software-basierten Komponenten bzw. Applikationen, vorzugsweise für das Anfordern und/oder Zurverfügungstellen von Diensten auf dem Gebiet der Telekommunikationstechnik.

In einem verteilten System mit verschiedenen Software Applikationen, die einem Anwender eines Telekommunikationsgerätes oder -netzwerkes beispielsweise bestimmte Dienste zur Verfügung stellen, müssen Parameter für die jeweiligen Applikationen erfaßt werden. Verschiedene Applikationen erfordern unterschiedliche Parameter, die in das System eingegeben werden müssen. Dabei kommt es häufiger vor, daß sich die Parametermengen für die einzelnen Applikationen überschneiden, so daß also ein Parameter von mehreren Applikationen verwendet und verarbeitet wird.
Da aber genau die Parametererfassung, wenn sie manuell erfolgt, ein fehleranfälliger Prozess ist, entstehen durch eine inkorrekte Parameterfestlegung teilweise schwerwiegende Folgefehler, die häufig nur schwer nachvollziehbar und damit behebbar sind.

Eine weitgehend automatisierte Erfassung von Kenngrößen, die von verschiedenen Prozessen verwendet werden, ist daher wünschenswert.

Bei bisherigen Systemen aus dem Stand der Technik, erfolgte die Erfassung von Parametern jeweils separat für jedes Applikationspaket über eine spezifische Eingabemaske einer Benutzeroberfläche. Dies hatte zur Folge, daß der zuständige Systemadministrator sehr viele solcher Eingabemasken zu öffnen hatte und weiterhin den Nachteil hatte, viele Parameter mehrfach eingeben zu müssen, da sie von verschiedenen Applikationen verwendet werden. Dieses redundante Vorgehen erhöhte die Fehlerwahrscheinlichkeit bekannter Systeme.

Ein weiterer Nachteil bestand darin, daß ein hoher Bedarf an qualifiziertem Personal (Administratoren) notwendig war, um den gesamten Vorgang des Zurverfügungstellens von Diensten und damit auch der Erfassung von Parametern vollziehen zu können, da der Prozeß der Erfassung der Parameter einerseits und der Prozeß der Eingabe der Parameterwerte andererseits ineinander verschachtelt waren.

Aufgabe der Erfindung ist es deshalb, einen Weg aufzuzeigen, der eine automatische und zentrale Erfassung von Kenngrößen für eine Menge von Prozessen ermöglicht und der eine redundante Eingabe dieser Kenngrößen ausschließt.

Die Aufgabe wird durch ein Verfahren der eingangs genannte Art gelöst, das folgende Verfahrensschritte umfaßt:
- Erfassen der Kenngröße(n) für jeden Prozeß aus der Menge der Prozesse
- Ermitteln der Interdependenzen zwischen den Kenngrößen, vorzugsweise Bestimmen von mehrfach verarbeiteten Kenngrößen, die von mehreren Prozessen und/oder von einem Prozeß mehrfach verarbeitet werden,
- automatisches Generieren von je einer Erfassungsmaske für jeweils einen Prozeß aufgrund der erfaßten Kenngrößen und/oder aufgrund der ermittelten Interdependenzen, und
- Erfassen der Werte der Kenngrößen mittels der generierten Erfassungsmasken,
wobei die Erfassungsmasken so erzeugt werden, daß die über die Gesamtheit aller generierten Erfassungsmasken erfaßten Werte der Kenngrößen jeweils nur einmal und/oder die Werte der mehrfach verarbeiteten Kenngrößen automatisch erfaßt werden.

Eine Aufgabenlösung gemäß Anspruch 14 besteht in einem System zur Erfassung von Werten von Kenngrößen, die von einer Menge von Prozessen verarbeitet werden, bei dem die Prozesse hinsichtlich der von ihnen verwendeten Kenngrößen Interdependenzen aufweisen, mit:
- einem Erfassungsmodul, das zum Erfassen der Kenngröße(n) für jeden Prozeß aus der Menge der Prozesse bestimmt ist,
- einem Verknüfungsmodul, das zum Ermitteln der Interdependenzen zwischen den Kenngrößen, vorzugsweise zum Bestimmen von mehrfach verarbeiteten Kenngrößen, die von mehreren Prozessen und/oder von einem Prozeß mehrfach verarbeitet werden, bestimmt ist,
- einem Generierungsmodul, das zum automatischen Generieren von je einer Erfassungsmaske für jeweils einen Prozeß aufgrund der erfaßten Kenngrößen und/oder aufgrund der ermittelten Interdependenzen, bestimmt ist,
wobei die Werte der mehrfach verarbeiteten Kenngrößen über die Erfassungsmaske automatisch erfaßt werden und
wobei die Erfassungsmasken so generiert werden, daß die über die Gesamtheit aller generierten Erfassungsmasken erfaßten Werte der Kenngrößen jeweils nur einmal erfaßt werden.

In der bevorzugten Ausführungsform der Erfindung betrifft das Verfahren die automatischen Erfassung von Parametern für eine Vielzahl von Applikationen auf dem Gebiet der Telekommunikation bzw. insgesamt den Prozeß der Bereitstellung von Diensten der Telekommunikation.

Alternative Anwendungsmöglichkeiten des erfindungsgemäßen Verfahrens liegen auf dem Gebiet der Prozeßsteuerung und der Automatisierungstechnik. Auch hier benötigen bestimmte Prozesse (beispielsweise der Fertigung) teilweise gemeinsame und teilweise unterschiedliche Parameter. Um diese Parameterwerte nicht redundant erfassen oder eingeben zu müssen, ist erfindungsgemäß eine zentral gesteuerte, automatisierte Erfassung möglich. Für alle Parameter, die von mehreren Anwendungen gemeinsam benutzt werden bzw. geteilt sind, werden die zugehörigen Werte nur einmal erfaßt und in allen anderen Erfassungsvorgängen automatisch ausgefüllt, indem die jeweiligen Inhalte des bereits erfaßten Parameters kopiert werden.

Die Menge der Applikationen wird bestimmt und für jede einzelne Applikation werden die erforderlichen Parameter bestimmt. Dieses Ergebnis wird einem Bearbeitungsvorgang unterzogen, indem aus der Menge der erforderlichen Parameter für die Menge der Applikationen eine applikationsspezifische Erfassungsmaske generiert wird, über die dann zu einem späteren Zeitpunkt die Parameterwerte erfaßt werden können. Dieser Vorgang läuft vorzugsweise automatisch ab.
In einer alternativen Ausführungsform ist es jedoch vorgesehen, hier kumulativ einen manuellen Eingriff seitens des Anwenders zuzulassen, so dass auch ein spezifisches Wissen über die Verknüpfungen der Parameter bei der Erzeugung der Erfassungsmasken berücksichtigt werden kann.

Ein wesentlicher Vorteil des hier dargestellten Verfahrens ist darin zu sehen, daß der Prozeß zur Erfassung von Parameterwerten mehrphasig abläuft und insbesondere in zwei Phasen aufteilbar ist, die einen unterschiedlichen Grad von Systemwissen voraussetzen. Erfindungsgemäß wird der Erfassungsvorgang so aufgeteilt, daß in einer ersten Phase Systemwissen hinsichtlich der Interdependenzen der notwendigen Parameter notwendig ist. Hier ist beispielsweise zu entscheiden, ob ein Parameter vorwiegend optional oder zwingend erforderlich ist bei der Verarbeitung in einer bestimmten Applikation.
Anhand dieser Daten wird für jeden Prozeß eine spezifische Erfassungsmaske erstellt, über die zu einem späteren Zeitpunkt deren Parameterwerte erfaßt werden.
In einer zweiten Phase können dann die für die Menge der Applikationen erforderlichen Parameterwerte automatisch abgefragt oder unter Zugriff auf weitere Datensätze automatisch ausgelesen werden. In dieser zweiten Phase ist kein Systemwissen erforderlich.

Das Verfahren bzw. System gemäß der Erfindung ist vorzugsweise so ausgelegt, daß die erste und zweite Phase vollständig voneinander entkoppelt ablaufen können. Das bedeutet, daß die Phasen zu unterschiedlichen Zeitpunkten und von verschiedenen Systembereichen eines verteilten Systems erfolgen können.

Durch die Aufteilung in Phasen ist es vorteilhafterweise möglich, unterschiedliche Anwenderprofile zuzuweisen. In der ersten Phase ist ein Administrator mit Systemwissen notwendig, der die Verknüpfungen bzw. Interdependenzen zwischen den Diensten bzw. den Prozessen mit deren Parametern kennt, während in der zweiten Phase ein Anwender einsetzbar ist, der nicht über spezielles Systemwissen verfügt. Er muß lediglich die über die Erfassungsmaske erfragten Werte angeben. Dabei muß er die Parameterwerte, die von mehreren Prozessen verarbeitet werden nur einmal eingeben, so daß inkonsistente Eingaben vermieden werden können.

Bei der Erstellung des Erfassungsmusters wird jede mögliche Kombination von Service-Applikationen berücksichtigt, so daß alle dafür notwendigen Parameterwerte erfaßt werden und später zur Verfügung stehen.

Für die Erstellung des Erfassungsmusters in der ersten Phase ist es vorgesehen, daß der Administrator - teilweise interaktiv - geführt wird. Dafür wird eine Liste von möglichen Diensten zur Verfügung gestellt, die eine bestimmte Parameterbelegung erfordern. Aus dieser Liste muß der Operator nun lediglich die für die jeweilige Anwendung bzw. Situation erforderlichen Dienste auswählen. Daraufhin werden ihm bestimmte zu erfassende Parameter vorgeschlagen, die er in einer vorteilhaften Ausführungsform der Erfindung bestätigen kann oder durch andere ersetzen und/oder ergänzen kann. Nach Beendigung dieses Definitionsschrittes wird vom System automatisch und vorteilhafterweise einheitlich und zentral jeweils eine Erfassungsmaske für jeweils einen Prozeß erstellt, die dann an beliebigen Stellen zur Verfügung steht und auch von unterschiedlichen Systemeinheiten bzw. verschiedenen Anwendern ausgefüllt werden kann.

Ein besonderer Vorteil ist darin zu sehen, daß auch verschiedene Benutzer die erforderlichen Parameterwerte in der zweiten Phase eingeben können und daß alternativ und/oder kumulativ eine automatische Erfassung durch Zugriff auf entsprechende Daten bzw. Datensätze des Systems möglich ist, ohne daß Inkonsistenzen hinsichtlich der erfaßten Parameter auftreten können.

Das hier beschriebene System ist generisch ausgebildet, so dass die Menge der Prozesse dynamisch und modular erweitert, verringert oder anderweitig verändert werden kann, ohne dass das System oder das Verfahren prinzipiell verändert werden müssen. In einer bevorzugten Ausführungsform erfolgt eine Änderung der Menge der Applikationen über eine spezifische Benutzermaske.

Es ist auch vorgesehen, die Prozesse, die dafür notwendigen Parameter und deren Interdependenzen in einer Datenbank abzulegen. Dann sind die von mehreren Prozessen gemeinsam verwendeten Parameter durch einen Zugriff auf die Datenbank bestimmbar.

In der bevorzugten Ausführungsform ist es vorgesehen, daß die Erfassungsmasken so generiert werden, daß sie anzeigen, welche Parameter prinzipiell für einen bestimmten Prozess notwendig sind, aber hier kein Eingabemöglichkeit für deren Werte vorsehen, falls dieser Parameterwert bereits aufgrund anderer Prozesse bestimmt worden ist.

Das Verfahren ist vorzugsweise so ausgelegt, daß die Schnittmenge der von dem Anwender einzugebenden Werte über die Menge aller Erfassungsmasken leer ist.

In der bevorzugten Ausführungsform betrifft der Prozeß eine Applikation, die einem Kunden spezifische telekommunikationstechnische Dienste zur Verfügung stellt und seinerseits auf bestimmte Kenngrößen zurückgreift, wie beispielsweise Parameter, Parameterwerte und/oder andere Daten bzw. Datensätze.

Eine alternative Aufgabenlösung sieht ein Speichermedium vor, das zur Speicherung des vorstehend beschriebenen, computerimplementierten Verfahrens bestimmt ist und von einem Computer lesbar ist.

Die vorstehend beschriebenen, erfindungsgemäßen Ausführungsformen des Verfahren können auch als Computerprogrammprodukt ausgebildet sein, welches ein computerlesbares Medium mit Computerprogramm-Code-Mitteln aufweist und bei dem nach Laden des Computerprogramms der Computer durch das Programm zur Durchführung des oben beschriebenen, erfindungsgemäßen Verfahrens veranlaßt wird.

Zusätzliche, vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:
- Figur 1: eine Prinzipdarstellung eines erfindungsgemäßen Verfahrens,
- Figur 2: ein Ablaufdiagramm des Verfahrens und
- Fig. 3a und 3b: eine schematische Darstellung einer Definitions maske und einer Erfassungsmaske.

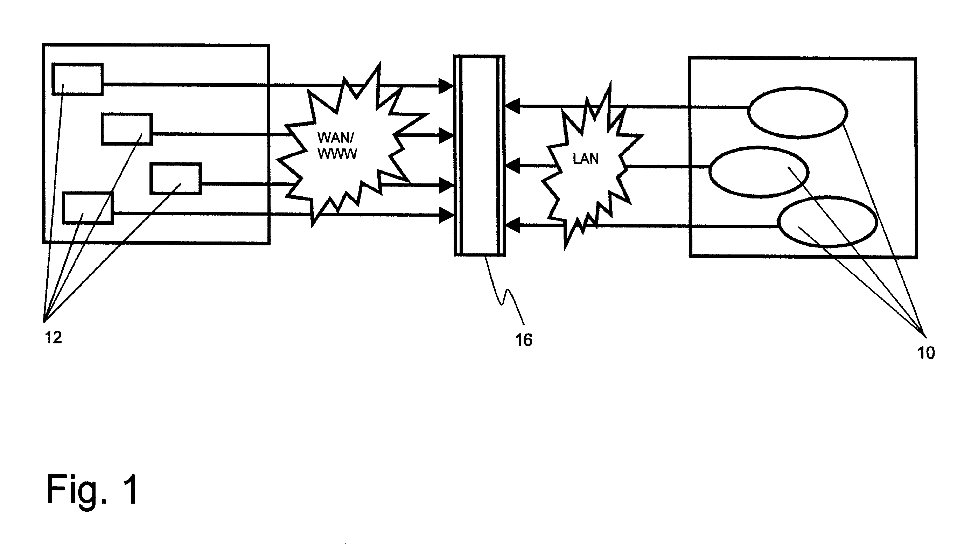

In Figur 1 ist das grundlegende Szenario des erfindungsgemäßen Verfahrens vorgestellt. Ein Kunde fordert beispielsweise bestimmte Dienste seines Telekommunikationsgerätes an, die den Ablauf bestimmter, technischer Prozesse 10 voraussetzen und ihrerseits auf einen Satz von teilweise unterschiedlichen und teilweise gleichen Parametern 12 zurückgreifen, deren Werte 14 erfaßt werden sollen. Die Erfassung der Parameterwerte 14 ist zentral gesteuert, als daß ein Parameterwert 14 eines Parameters 12, der von mehreren Prozessen 10 verwendet wird jeweils nur einmal erfaßt wird und ansonsten automatisch übernommen wird.

Dabei ist es vorgesehen, daß die Erfassung der Parameterwerte 14 von einem zentralen System 16 vorgenommen wird, das Anforderungsprofile und spezifische Masken 18, 20 zur Erfassung von Parameterwerten 14 von Benutzeroberflächen über ein Datenverkehrsnetz, insbesondere ein WAN oder ein LAN zur Verfügung stellen kann.

Da die Menge der Prozesse 10 und die Menge der von ihnen verarbeiteten Parameter 12 zentral vermittelt werden, ist es möglich, eine redundante Eingabe von Parameterwerten 14 zu vermeiden.

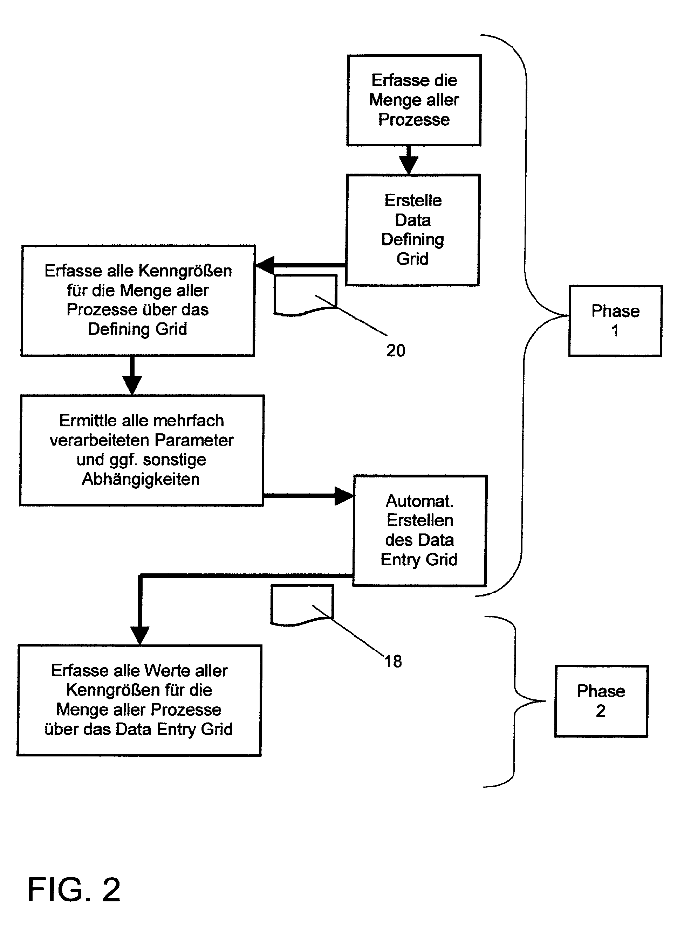

Wie in Figur 2 dargestellt wird das erfindungsgemäße Vorgehen in zwei Phasen aufgegliedert: in eine Definitionsphase, die ein Systemwissen voraussetzt, insbesondere ein Wissen über die Zusammenhänge zwischen den einzelnen Prozessen 10 mit deren Parametern 12 und in eine Erfassungsphase, die von beliebigem Personal ausgeführt werden kann, da die notwendigen, zu tätigenden Eingaben über eine Erfassungsmaske 18 vorgegeben sind. In der ersten Definitionsphase wird erfaßt, welcher Dienst auf welchen Parametern 12 in welcher Weise aufsetzt.

Dabei wird in der bevorzugten Ausführungsform der Erfindung ebenfalls eine Definitionsmaske 20 - ein sogenanntes Data Definition Grid - verwendet, die für eine Menge von Diensten bzw. Prozessen 10 eine Menge von auswählbaren Parametern 12 vorschlägt. Dieser Vorschlag kann jedoch beliebig abgeändert oder ergänzt werden. Dann werden die Abhängigkeiten der jeweiligen Prozesse 10 mit deren Parametern 12 untereinander bestimmt. Hier wird insbesondere erfaßt, welche Parameter 12 mehrfach verarbeitet werden. Dies kann zum einen dadurch geschehen, indem ein und derselbe Parameter 12 von mehreren unterschiedlichen Prozessen 10 verarbeitet wird. Es kann jedoch auch die Folge davon sein, daß der Parameter 12 von einem Prozess 10 mehrfach verwendet wird. In diesen Fällen wird der entsprechende Wert 14 nur jeweils einmal innerhalb des Systems erfaßt.

Nach dem Ermitteln der Parameter 12 und deren Interdependenzen wird nun automatisch eine Erfassungsmaske 18, das sogenannte Data Entry Grid, iterativ für alle Prozesse 10 aus der Menge der Prozesse erstellt.

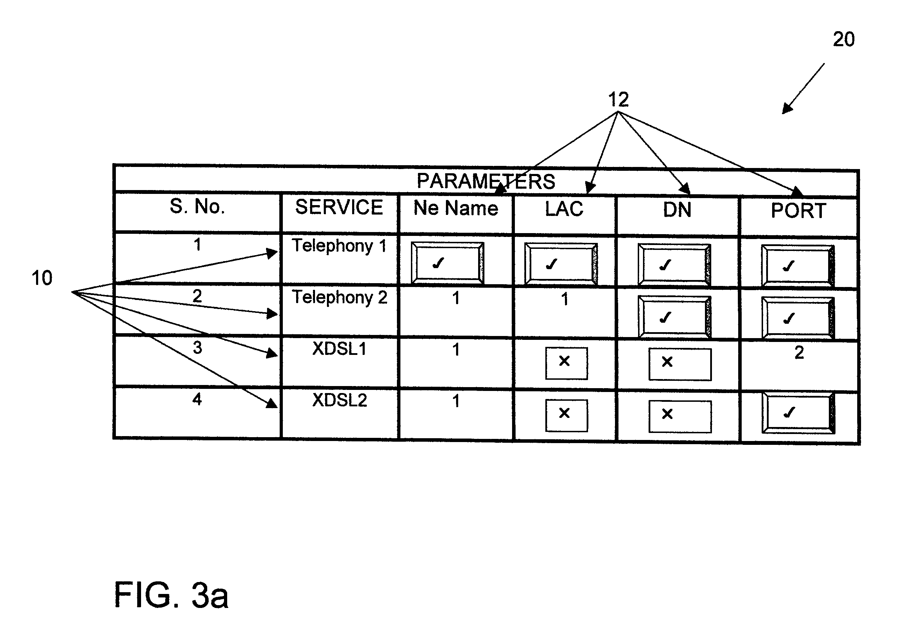

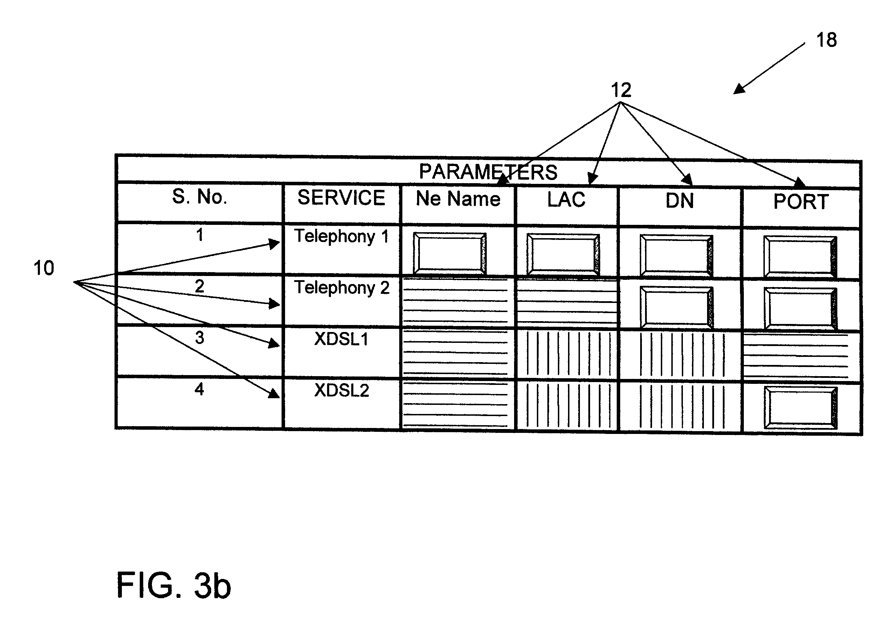

In Figur 3a und 3b ist jeweils schematisch ein Beispiel für eine Erfassungsmaske 18 und eine Definitionsmaske 20 dargestellt. Beide sind in der bevorzugten Ausführungsform tabellenartig angelegt. Es ist allerdings auch möglich, eine andere Datenstruktur zu wählen und gegebenenfalls noch zusätzliche Datensätze darin aufzunehmen.

Aus der unterschiedlichen Hinterlegung der einzelnen Felder der Tabelle in Figur 3b ist ersichtlich, daß die Erfassungsmaske 18 zwar den Benutzer alle erforderlichen Parameterwerte 14 anzeigt, aber nur für diejenigen eine Eingabemöglichkeit vorsieht, deren Werte 14 nicht bereits anderweitig erfaßt worden sind. Alle notwendigen, aber bereits erfaßten Werte sind hier horizontal gestreift dargestellt. Die jeweils nicht notwendigen Werte sind vertikal gestreift markiert. Beide Masken 18, 20 sind Bestandteil von Benutzeroberflächen.

In der ersten Phase legt ein Administrator anhand der Definitionsmaske 20 fest, welche Parameter 12 für einen bestimmten Dienst bzw. Prozeß 10 ausgewählt werden sollen, welche von anderen Prozessen 10 geteilt sind und auf welche Weise sie in der jeweiligen Applikation verwendet werden. Beispielsweise kann der Parameter "Port" zur Kennzeichnung der Teilnehmerleitung für die Benutzung von Sprachdiensten und für die Benutzung von DSL-Datendiensten verwendet werden. Dabei ist jegliche zulässige Kombination von Diensten auswählbar. Um einen weiteren Dienst zu der Definitionsmaske 20 hinzuzufügen, muß der Administrator einen oder mehrere Dienste, die ihm über eine Auswahlliste angeboten werden, auswählen (z.B. Telefonie oder xDSL). Dies wird als neuer Zeileneintrag in der tabellenförmig angelegten Definitionsmaske 20 aufgenommen. Je nach Anzahl der für diesen Dienst notwendigerweise benötigten Parameter 12, wird eine entsprechende Anzahl von Spalten hinzugefügt.

In Figur 3a ist gezeigt, daß bei dem Dienst "Telephony 1" unter dem Parameter "Ne Name" ein anzukreuzendes Kästchen vorgesehen ist, um anzuzeigen, daß dieser Parameterwert 14 zu einem späteren Zeitpunkt eingegeben oder unter Zugriff auf andere Datenstrukturen des Systems eingelesen werden muß. Für alle anderen in dieser Figur dargestellten Dienste, enthält die Definitionsmaske 20 hinsichtlich des Parameters "Ne Name" die Zahl "1" als Eintrag, um anzuzeigen, daß der Wert später nicht eingeben werden muß, sondern automatisch aus dem entsprechenden Feld des ersten Dienstes generiert werden kann. Dies wird durch Kopieren der jeweiligen Inhalte ausgeführt. Gleiches gilt für den Parameter "LAC", der für den Dienst "Telephony 2" ebenfalls nur aus dem ersten Eintrag kopiert zu werden braucht. Dieser Parameter ist hingegen für die beiden nächsten Dienste nicht erforderlich. Dies ist in Figur 3a durch ein Kreuz angedeutet.

Wie oben bereits erwähnt, können sich die jeweiligen Dienste nicht nur hinsichtlich der Parameter 12 unterscheiden, sondern auch hinsichtlich deren Verwendung. So erfordern die Dienste "Telephony 1" und "Telephony 2" jeweils unterschiedliche Verwendungen des Parameters "Port", so daß dieser Parameter bei beiden Diensten eingeben werden muß.

Die Definitionsmaske 20 ist so ausgelegt, daß aus ihr automatisch die Erfassungsmaske 18 abgeleitet werden kann.

Durch die zentrale Steuerung und die Generierung der Masken ist es möglich, so wenig interaktive Eingaben seitens eines Anwenders wie möglich vorzusehen, um potentielle Fehlerquellen ausschalten zu können.

Mit Erstellung der Erfassungsmaske 18 ist die erste Phase abgeschlossen. Nun kann zu einem beliebigen späteren Zeitpunkt ein Anwender anhand der Erfassungsmaske 20 alle notwendigen Parameterwerte 14 eingeben und wird dabei interaktiv geführt. Er muß sich insbesondere nicht um etwaige Inkonsistenzen kümmern, die beispielsweise dadurch entstehen können, daß für ein und denselben Parameter 12 unterschiedliche Werte 14 existieren. Durch das erfindungsgemäße Vorgehen ist ein solcher Fehler ausgeschlossen.

In einer alternativen Ausführungsform der Erfindung greift das System zusätzlich auf ein Verifikationsmodul zurück, das dazu bestimmt ist, Eingaben, die in der Erfassungsmaske 18 hinsichtlich der Parameterwerte 14 getätigt werden, auf ihre Zulässigkeit hin zu überprüfen. So wird beispielsweise unmittelbar nach einer inkorrekten Eingabe eine Fehlermeldung angezeigt, falls hier eine unzulässige alphanumerische Kombination eingegeben worden ist.

## Patentansprüche

1. Verfahren zur Erfassung von Werten (14) von Kenngrößen (12), die von einer Menge von Prozessen (10) verarbeitet werden, bei dem die Prozesse (10) hinsichtlich der von ihnen verwendeten Kenngrößen (12) Interdependenzen aufweisen, mit folgenden Schritten:
- Erfassen der Kenngröße(n) (12) für jeden Prozeß (10) aus der Menge der Prozesse
- Ermitteln der Interdependenzen zwischen den Kenngrößen (12), vorzugsweise Bestimmen von mehrfach verarbeiteten Kenngrößen, die von mehreren Prozessen und/oder von einem Prozeß mehrfach verarbeitet werden,
- automatisches Generieren von je einer Erfassungsmaske (18) für jeweils einen Prozeß (10) aufgrund der erfaßten Kenngrößen (12) und/oder aufgrund der ermittelten Interdependenzen, und
- Erfassen der Werte (14) der Kenngrößen (12) mittels der generierten Erfassungsmasken (18),
wobei die Erfassungsmasken (18) so erzeugt werden, daß die über die Gesamtheit aller generierten Erfassungsmasken (18) erfaßten Werte (14) der Kenngrößen (12) jeweils nur einmal und/oder die Werte (14) der mehrfach verarbeiteten Kenngrößen (12) automatisch erfaßt werden.

2. Verfahren nach Anspruch 1,
**dadurch gekennzeichnet, daß**
die Menge der Prozesse (10) dynamisch veränderlich ist, ohne daß das Verfahren einer Änderung unterzogen werden muß.

3. Verfahren nach mindestens einem der Ansprüche 1 oder 2,
**dadurch gekennzeichnet, daß**
das Erfassen der Kenngrößen (12) für alle Prozesse (10) aus der Menge der Prozesse über eine Definitionsmaske (20) erfolgt.

4. Verfahren nach mindestens einem der vorstehenden Ansprüche,
**dadurch gekennzeichnet, daß**
die für den jeweiligen Prozeß (10) zwingend notwendigen Kenngrößen (12) erfaßt werden.

5. Verfahren nach mindestens einem der vorstehenden Ansprüche,
**dadurch gekennzeichnet, daß**
die für den jeweiligen Prozeß (10) optionalen Kenngrößen (12) erfaßt werden.

6. Verfahren nach mindestens einem der vorstehenden Ansprüche,
**dadurch gekennzeichnet, daß**
das Verfahren folgenden Schritt umfaßt:
Erfassen eines Verarbeitungsvektors, der angibt, wie die erfaßten Kenngrößen (12) des jeweiligen Prozesses (10) verarbeitet bzw. verwendet werden.

7. Verfahren nach mindestens einem der vorstehenden Ansprüche,
**dadurch gekennzeichnet, daß**
die Erfassungsmaske (18) prozeßsspezifisch ist.

8. Verfahren nach mindestens einem der vorstehenden Ansprüche,
**dadurch gekennzeichnet, daß**
die Erfassungsmasken (18) für die Menge der Prozesse (10) so ausgelegt sind, dass die Werte (14) von mehrfach verarbeiteten Kenngrößen (12) nur einmal erfaßt werden.

9. Verfahren nach mindestens einem der vorstehenden Ansprüche,
**dadurch gekennzeichnet, daß**
die Generierung der Erfassungsmasken (18) automatisch erfolgt.

10. Verfahren nach mindestens einem der vorstehenden Ansprüche,
**dadurch gekennzeichnet, daß**
bei der Generierung der Erfassungsmasken (18) auf ein Verifikationsmodul zurückgegriffen wird, das eine Überprüfung der eingegebenen Daten und/oder Werte auf Zulässigkeit umfaßt.

11. Verfahren nach mindestens einem der vorstehenden Ansprüche,
**dadurch gekennzeichnet, daß**
bei der Generierung der Erfassungsmasken (18) die Struktur der Prozesse und/oder die Interdependenzen der erfaßten Kenngrößen (12) zwischen den Prozessen (10) verarbeitet werden.

12. Verfahren nach mindestens einem der vorstehenden Ansprüche,
**dadurch gekennzeichnet, daß**
die Kenngrößen (12) und/oder die Werte (14) der Kenngrößen (12) zentral erfaßt werden, vorzugsweise auch bei verteilten Prozessen (10).

13. Verfahren nach mindestens einem der vorstehenden Ansprüche,
**dadurch gekennzeichnet, daß**
die Werte (14) der mehrfach verarbeiteten Kenngrößen (12) automatisch erfaßt werden, indem ein über die Erfassungsmaske (18) ermittelter Wert (14) für die anderen Kenngrößen kopiert wird.

14. System zur Erfassung von Werten (14) von Kenngrößen (12), die von einer Menge von Prozessen (10) verarbeitet werden, bei dem die Prozesse (10) hinsichtlich der von ihnen verwendeten Kenngrößen (12) Interdependenzen aufweisen, mit:
- einem Erfassungsmodul, das zum Erfassen der Kenngröße(n) (12) für jeden Prozeß (10) aus der Menge der Prozesse bestimmt ist,
- einem Verknüpfungsmodul, das zum Ermitteln der Interdependenzen zwischen den Kenngrößen (12), vorzugsweise zum Bestimmen von mehrfach verarbeiteten Kenngrößen, die von mehreren Prozessen und/oder von einem Prozeß mehrfach verarbeitet werden, bestimmt ist,
- einem Generierungsmodul, das zum automatischen Generieren von je einer Erfassungsmaske (18) für jeweils einen Prozeß (10) aufgrund der erfaßten Kenngrößen (12) und/oder aufgrund der ermittelten Interdependenzen, bestimmt ist,
wobei die Werte (14) der mehrfach verarbeiteten Kenngrößen (12) über die Erfassungsmaske (18) automatisch erfaßt werden und
wobei die Erfassungsmasken (18) so generiert werden, daß die über die Gesamtheit aller generierten Erfassungsmasken (18) erfaßten Werte (14) der Kenngrößen (12) jeweils nur einmal erfaßt werden.

15. System nach Anspruch 14,
**dadurch gekennzeichnet, daß**
die Menge der Prozesse beliebig dynamisch geändert werden kann, ohne daß ein Neuentwurf des Systems vorgenommen werden muß.
